(19)

**Europäisches Patentamt**
**European Patent Office**
**Office européen des brevets**

(11) **EP 3 605 418 A1**

(12) **EUROPEAN PATENT APPLICATION**

(43) Date of publication:
**05.02.2020 Bulletin 2020/06**

(51) Int Cl.:
*G06Q 10/00* (2012.01)

(21) Application number: **19189735.4**

(22) Date of filing: **02.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2018 US 201816054124**

(71) Applicant: **The Boeing Company**
**Chicago, IL 60606-2016 (US)**

(72) Inventors:
• **BEYGI, Shervin**
**Chicago, IL Illinois 60606 (US)**
• **PARTIN, Stefan J.**
**Chicago, IL Illinois 60606 (US)**

(74) Representative: **Sandri, Sandro**
**Bugnion S.P.A.**
**Via Pancaldo 68**
**37138 Verona (IT)**

(54) **AIRCRAFT COMPONENT DEMAND FORECASTING**

(57)    An example method includes calculating a first probability that an unretired representative aircraft will have a future service lifetime that is no less than a first service lifetime of a first retired aircraft, calculating a second probability that the unretired representative aircraft will have a future service lifetime that is no less than a second service lifetime of a second unretired aircraft, based on (i) the first probability, (ii) the second probability, (iii) a first operation history of the first retired aircraft, and (iv) a second operation history of the second unretired aircraft, generating a theoretical hazard function that is dependent on a current service lifetime of the unretired representative aircraft and dependent on an operation history of the unretired representative aircraft, and based on (i) the theoretical hazard function, (ii) the second service lifetime, and (iii) the second operation history, calculating a quantity of a component to maintain.

INSTRUCTIONS **114**

**318**

**320**

DATA **115**

COMPUTER READABLE MEDIA **104**

PROCESSOR(S) **102**

COMMUNICATION INTERFACE **106**

USER INTERFACE **110**

DISPLAY **108**

112

COMPUTING SYSTEM **100**

**FIG. 1**

## Description

FIELD

The present disclosure generally relates to computing systems and methods for forecasting aircraft component demand, and more specifically to computing systems and methods for forecasting aircraft component demand using aircraft retirement data.

BACKGROUND

Commercial airlines or other owners of an aircraft fleet will often find it useful to forecast demand for a particular aircraft component (e.g., a turbofan blade) over a future period of time. In some instances, it is known that an aircraft component has an average replacement rate (e.g., replaced every 3 months). Based on a predicted quantity of aircraft that will use the component and a known quantity of the component that each aircraft uses, one can use the replacement rate to calculate a quantity of the component to maintain in inventory. Hopefully, the quantity of the component in inventory somewhat closely matches the quantity of the component that will be replaced or otherwise installed on aircraft of the fleet over the future period of time. Matching the supply of the component on hand with the forecasted demand for the component helps reduce costs of maintaining unnecessary inventory and also helps to prevent component shortages.

One such method of forecasting component demand is time-series analysis, which involves forecasting a total quantity of aircraft that will be in service during a future period of time (e.g., forecasting an active fleet size). This method typically examines the historical fleet size as a whole without accounting for the age and usage history of the individual aircraft. This method typically underestimates the quantity of aircraft "retirements" that will occur in the future and therefore often overestimates component demand. Thus, a need exists for more accurate methods of forecasting aircraft component demand based on aircraft retirement data or other factors.

SUMMARY

One aspect of the disclosure is a computing system configured to perform functions for calculating a quantity of a component to maintain in inventory. The computing system includes one or more processors and one or more non-transitory computer readable media storing instructions, that when executed by the one or more processors, cause the computing system to perform functions. The functions include identifying a type of aircraft for analysis; calculating a first probability that an unretired representative aircraft of the identified type will have a future service lifetime that is no less than a first service lifetime of a first retired aircraft of the identified type; and calculating a second probability that the unretired representative aircraft of the identified type will have a future service lifetime that is no less than a second service lifetime of a second unretired aircraft of the identified type. The functions further include, based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type. The functions further include, based on (i) the theoretical hazard function, (ii) the second service lifetime, and (iii) the second operation history, calculating a quantity of a component to maintain in inventory, where the component is configured for use on the second unretired aircraft. The functions further include initiating a process to maintain the calculated quantity of the component in inventory.

Another aspect of the disclosure is a method for calculating a quantity of a component to maintain in inventory. The method includes identifying a type of aircraft for analysis; calculating a first probability that an unretired representative aircraft of the identified type will have a future service lifetime that is no less than a first service lifetime of a first retired aircraft of the identified type; and calculating a second probability that the unretired representative aircraft of the identified type will have a future service lifetime that is no less than a second service lifetime of a second unretired aircraft of the identified type. The method further includes, based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type. The method further includes, based on (i) the theoretical hazard function, (ii) the second service lifetime, and (iii) the second operation history, calculating a quantity of a component to maintain in inventory, where the component is configured for use on the second unretired aircraft. The method further includes initiating a process to maintain the calculated quantity of the component in inventory.

A further aspect of the disclosure is one or more non-transitory computer readable media storing instructions that, when executed by a computing system, cause the computing system to perform functions. The functions include identifying a type of aircraft for analysis; calculating a first probability that an unretired representative aircraft of the identified type will have a future service lifetime that is no less than a first service lifetime of a first retired aircraft of the identified type; and calculating a second probability that the unretired representative aircraft of the identified type will have a future service lifetime that is no less than a second service lifetime of a second unretired aircraft of the identified type. The functions further include, based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type. The functions further include, based on (i) the theoretical hazard function, (ii) the second service lifetime, and (iii) the second operation history, calculating a quantity of a component to maintain in inventory, where the component is configured for use on the second unretired aircraft. The functions further include initiating a process to maintain the calculated quantity of the component in inventory.

By the term "about" or "substantially" with reference to amounts or measurement values described herein, it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The features, functions, and advantages that have been discussed can be achieved independently in various examples or may be combined in yet other examples further details of which can be seen with reference to the following description and drawings.

BRIEF DESCRIPTION OF THE DRAWINGS

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying Figures.

Figure 1 is a schematic diagram of a computing system, according to an example.
Figure 2 is a block diagram of a method, according to an example.
Figure 3A is a block diagram of a method, according to an example.
Figure 3B is a block diagram of a method, according to an example.
Figure 4 is a table showing data and outputs of calculations related to aircraft service lifetime, according to an example.
Figure 5 is a table showing data and outputs of calculations related to aircraft service lifetime, according to an example.
Figure 6 is a table showing data and outputs of calculations related to aircraft service lifetime, according to an example.
Figure 7 is a table showing data and outputs of calculations related to aircraft service lifetime, according to an example.
Figure 8 is an equation related to aircraft service lifetime and operation history, according to an example.
Figure 9 is an equation related to aircraft service lifetime and operation history, according to an example.
Figure 10 is an equation related to aircraft service lifetime and operation history, according to an example.
Figure 11 shows data related to survival probabilities at various times in the future for a particular unretired aircraft.
Figure 12 shows data related to survival probabilities of various unretired aircraft for a common period of future time.

DETAILED DESCRIPTION

As discussed above, there exists a need for more accurate methods of forecasting aircraft component demand based on aircraft retirement data or other factors. Accordingly, this disclosure includes methods and computing systems for calculating a quantity of a component to maintain in inventory.

To this end, this disclosure is generally related to analysis of aircraft service lifetimes and retirement status of such aircraft. An aircraft being referred to as "unretired" generally means that a user plans to fly the aircraft in the future, for example, to move people or freight. An aircraft being referred to as "retired" generally means that the aircraft has been salvaged for components and/or the user does not plan to fly the aircraft in the future. A service lifetime of an unretired aircraft generally refers to the amount of time between (i) manufacture or delivery of the aircraft to the user and (ii) the present time. As such, the service lifetime of an unretired aircraft continues to increase until the aircraft is retired. A service lifetime of a retired aircraft generally refers to the amount of time between (i) manufacture or delivery of the aircraft to the user and (ii) the time at which the aircraft was salvaged. Alternatively, the end of a service lifetime of a retired aircraft could be marked by the time at which the user manifested intent not to fly the aircraft any longer. To be correctly referred to as retired, such an aircraft should not be involved in flight operations after such intent is manifested by the user.

Accordingly, a computing system can identify a type of aircraft (*e.g.*, BOEING 737™) for analysis. As an example, the computing system might receive, via a user interface, input identifying or selecting a type of aircraft. In another example, the computing system can identify for analysis each type of aircraft of a fleet according to a predetermined sequence.

Thereafter, the computing system can access data indicative of service lifetimes and retirement statuses of retired or unretired aircraft of the identified type and calculate (e.g., tens or hundreds) of probabilities that that an unretired representative aircraft of the identified type will have a future service lifetime that is no less than the respective service lifetimes of each retired or unretired aircraft. The unretired representative aircraft generally represents a hypothetical aircraft that is "typical" of the identified type and has a current service lifetime that is less than the service lifetime of each aircraft being analyzed.

To this end, the computing system will typically first identify a particular aircraft (retired or unretired) having the shortest service lifetime of the aircraft of the identified type and calculate a probability that an unretired representative aircraft of the identified type will have a future service lifetime that is no less than the service lifetime of the particular aircraft. The probability is generally dependent on whether the particular aircraft has been retired and a total quantity of aircraft of the identified type within the fleet. The computing system can also identify an additional aircraft (retired or unretired) having the next shortest service lifetime of the aircraft of the identified type. The probability associated with the particular aircraft, along with the service lifetime and retirement status of the additional aircraft, can be used to calculate another probability that an unretired representative aircraft of the identified type will have a future service lifetime that is no less than the service lifetime of the additional aircraft. In this way, each calculated probability is used to recursively calculate a subsequent probability. These probabilities define an empirical survival function that relates service lifetimes to respective probabilities that the unretired representative aircraft will "survive" unretired to have a future service lifetime that exceeds each corresponding service lifetime. By definition, the empirical survival function will be monotonically decreasing with respect to increasing service lifetime.

The empirical survival function will be defined by at least one probability corresponding to a service lifetime of an unretired aircraft and at least one probability corresponding to a service lifetime of a retired aircraft.

The computing system can then use the empirical survival function to calculate hazard values for the service lifetime of each aircraft of the identified type. Each hazard value represents a risk that an unretired representative aircraft of the identified type having the corresponding service lifetime will be immediately retired (e.g., within an infinitesimally small duration of time after attaining the corresponding service lifetime). The hazard values and operation histories of the aircraft of the identified type can then be used to generate a theoretical hazard function that includes a baseline hazard factor that is dependent on a current service lifetime of the unretired representative aircraft of the identified type and a proportional hazard factor that is dependent on an operation history of the unretired representative aircraft of the identified type. That is, regression analysis techniques such as least squares or maximum likelihood can be used to generate a theoretical hazard function that is optimized to fit the data represented by the hazard values and the operation histories of the aircraft.

Typically, the computing system will convert the theoretical hazard function into a theoretical survival function. For example, the computing system can integrate the theoretical hazard function with respect to service lifetime to generate a cumulative hazard function. The theoretical survival function is generally equal to Euler's number raised to an additive inverse of the cumulative hazard function. The theoretical survival function can then be used, in conjunction with service lifetimes and operation histories of unretired aircraft to predict probabilities that individual unretired aircraft will be retired during a future period of time. By determining the size of an unretired fleet of aircraft of the identified type, the computing system can then calculate (e.g., estimate) a quantity of a component to maintain in inventory and initiate a process to maintain that quantity of the component in inventory. In this context, the component is configured for use on the unretired aircraft of the identified type.

The methods disclosed herein can be advantageous because they allow for predicting future active fleet size (and component demand that is dependent on active fleet size) based on characteristics and operation histories of individual aircraft, instead of analyzing aircraft retirement patterns of the fleet as a whole.

Implementations of this disclosure provide technological improvements that are particular to computer networks and computing systems, for example, computing systems used to monitor quantities of aircraft components in inventory and/or computing systems used to forecast demand for such aircraft components.

Computing system-specific technological problems, such as the management and use of large quantities of complex data stemming from multiple sources, as well as inefficiency associated therewith, can be wholly or partially solved by the implementations of this disclosure. For example, implementation of this disclosure reduces time spent analyzing data to identify the effect factors such as aircraft service lifetime and operation history have on future retirement likelihood of such aircraft. Thus, implementation of this disclosure can reduce the cost and complexity of implementing less efficient methods and systems for diagnosing and resolving such problems. As another example, implementation of this disclosure increases accuracy and reliability of diagnostic information.

Implementations of this disclosure can thus introduce new and efficient improvements in the ways in which a computing system analyzes aircraft retirement data and aircraft operation history data, and in turn facilitate new and efficient improvements in the ways in which the associated data is used to diagnose and resolve problems. Implementations of this disclosure can condense and perform calculations with large amounts of information that might not otherwise be easily usable to forecast aircraft component demand, in order to make the information interpretable for the purpose of identifying causal relationships between service lifetime, operation history, and future retirement likelihood.

Disclosed examples will now be described more fully hereinafter with reference to the accompanying Drawings, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

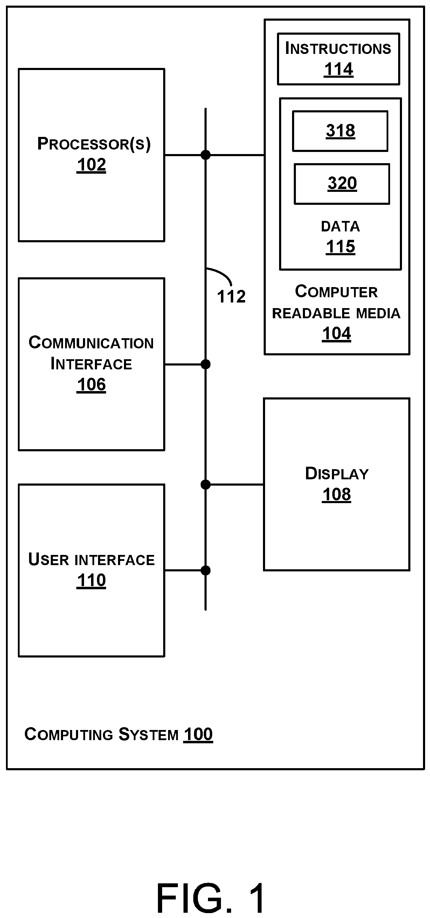

Referring now to Figure 1, an example computing system 100 is illustrated. In some examples, components illustrated in Figure 1 may be distributed across multiple computing devices or computing systems. However, for the sake of example, the components are shown and described as part of one example computing system 100. The computing system 100 may be or include a mobile device (such as a mobile phone), a desktop computer, a laptop computer, a tablet computer, a server, a network of multiple servers, or similar device(s) that may be configured to perform the functions described herein.

As shown in Figure 1, the computing system 100 includes one or more processors 102, one or more non-transitory computer readable media 104, a communication interface 106, a display 108, and a user interface 110. Components illustrated in Figure 1 may be linked together by a system bus, network, or other connection mechanism 112.

The one or more processors 102 can be any type of processor(s), such as a microprocessor, a digital signal processor, a multicore processor, etc., coupled to the one or more non-transitory computer readable media 104. The one or more non-transitory computer readable media 104 can be any type of memory, such as volatile memory like random access memory (RAM), dynamic random access memory (DRAM), static random access memory (SRAM), or non-volatile memory like read-only memory (ROM), flash memory, magnetic or optical disks, or compact-disc read-only memory (CD-ROM), among other devices used to store data or programs on a temporary or permanent basis.

Additionally, the one or more non-transitory computer readable media 104 can be configured to store instructions 114. The instructions 114 may be executable by the one or more processors 102 to cause the computing system 100 to perform any of the functions described herein. The one or more non-transitory computer readable media 104 may also be configured to store data 115 that is related to service lifetimes and operation histories of various retired or unretired aircraft.

The communication interface 106 can include hardware to enable communication within the computing system 100 and/or between the computing system 100 and one or more other devices. The hardware can include transmitters, receivers, and antennas, for example. The communication interface 106 can be configured to facilitate communication with one or more other devices, in accordance with one or more wired or wireless communication protocols. For example, the communication interface 106 can be configured to facilitate wireless data communication for the computing system 100 according to one or more wireless communication standards, such as one or more IEEE 801.11 standards, ZigBee standards, Bluetooth standards, etc. As another example, the communication interface 106 can be configured to facilitate wired data communication with one or more other devices.

The display 108 can be any type of display component configured to display data. As one example, the display 108 can include a touchscreen display. As another example, the display 108 can include a flat-panel display, such as a liquid-crystal display (LCD) or a light-emitting diode (LED) display.

The user interface 110 can include one or more pieces of hardware used to provide data and control signals to the computing system 100. For instance, the user interface 110 can include a mouse or a pointing device, a keyboard or a keypad, a microphone, a touchpad, or a touchscreen, among other possible types of user input devices. Generally, the user interface 110 can enable an operator to interact with a graphical user interface (GUI) provided by the computing system 100 (*e.g.*, displayed by the display 108).

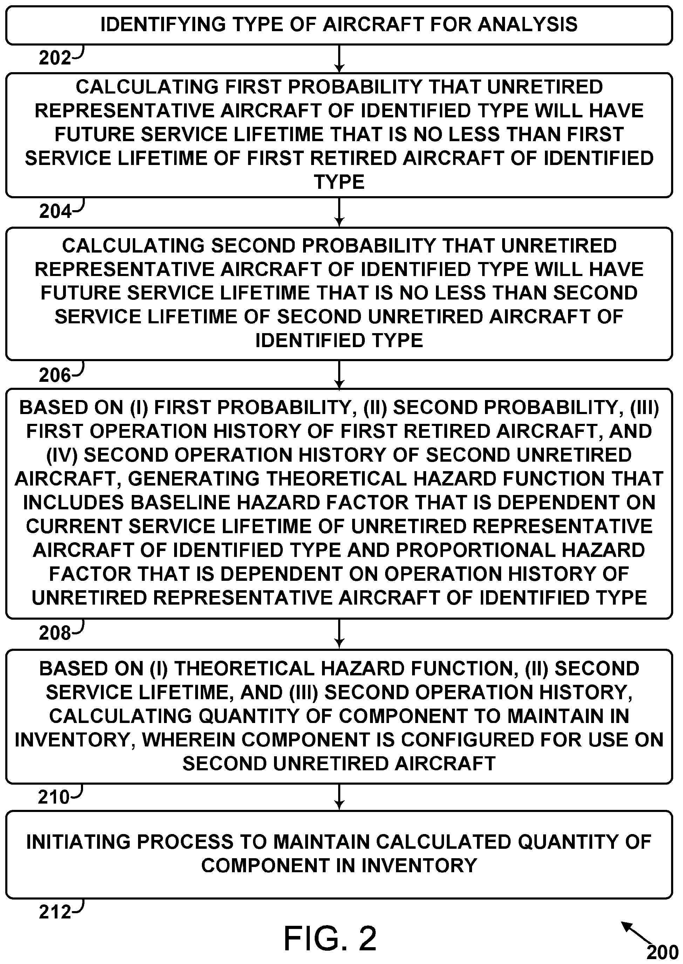

Figure 2 shows a block diagram of a method 200 for calculating a quantity of a component to maintain in inventory.

At block 202, the method 200 includes identifying a type of aircraft for analysis. For example, the computing system 100 can identify a fleet of BOEING 737s™ for analysis. More specifically, the computing system 100 might receive, via the user interface 110, input identifying or selecting a group of BOEING 737s™ for analysis. In another example, the computing system 100 can identify for analysis each type of aircraft of a fleet according to a predetermined sequence. That is, the computing system 100 can be configured to identify a type of aircraft of all of the types of aircraft within the fleet that was least recently analyzed, and proceed to analyze that particular type of aircraft.

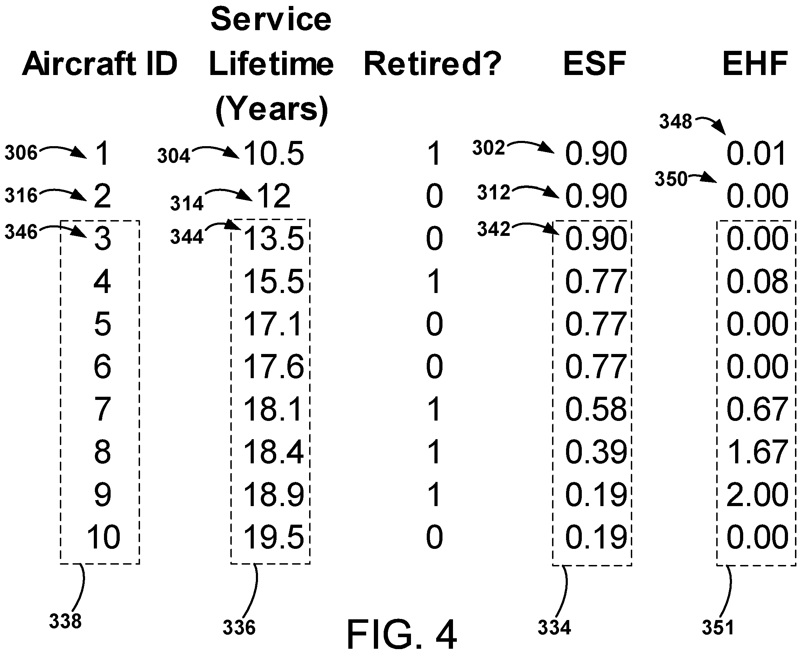

Figure 4 is a table showing data and outputs of calculations related to block 204 and block 206 which are discussed below. Figure 4 depicts service lifetimes (in units of years) and retirement statuses of aircraft denoted #1-10. The aircraft #1-10 are aircraft of the type identified in block 202 (*e.g.*, BOEING 737s™). In Figures 4-7, retired aircraft have a 1 in the column labeled "Retired?" and unretired aircraft have a 0 in the column labeled "Retired?". Figure 4 also has columns labeled ESF (empirical survival function) and EHF (empirical hazard function), which contain outputs of calculations that are described in detail below. The data displayed within the columns labeled Aircraft ID, Service Lifetime (Years), and Retired? can be stored as part of the data 115. In particular, Figure 4 shows data corresponding to a fleet of aircraft in which the aircraft having the shortest service lifetime (10.5 years) is retired, the aircraft having the second shortest lifetime (12 years) is unretired, and the aircraft having the third shortest lifetime (13.5 years) is unretired.

Returning to Figure 2, at block 204, the method 200 includes calculating a first probability that an unretired representative aircraft of the identified type will have a future service lifetime that is no less than a first service lifetime of a first retired aircraft of the identified type. The unretired representative aircraft generally represents a hypothetical aircraft that is "typical" of the identified type and has a current service lifetime that is less than the service lifetime being analyzed. As such, in the context of block 204, the unretired representative aircraft is assumed to have a service lifetime that is less than the first service lifetime of the first retired aircraft. During typical operations related to block 204, the computing system 100 will calculate probabilities corresponding to service lifetimes of several retired aircraft, as is described below.

It should be noted that the first probability is not necessarily a probability that is calculated before all other probabilities that correspond to service lifetimes of other aircraft of the identified type. In this context, the use of ordinal numbers such as "first," "second," and "third," and so on is to distinguish respective elements rather than to denote a particular order of those elements.

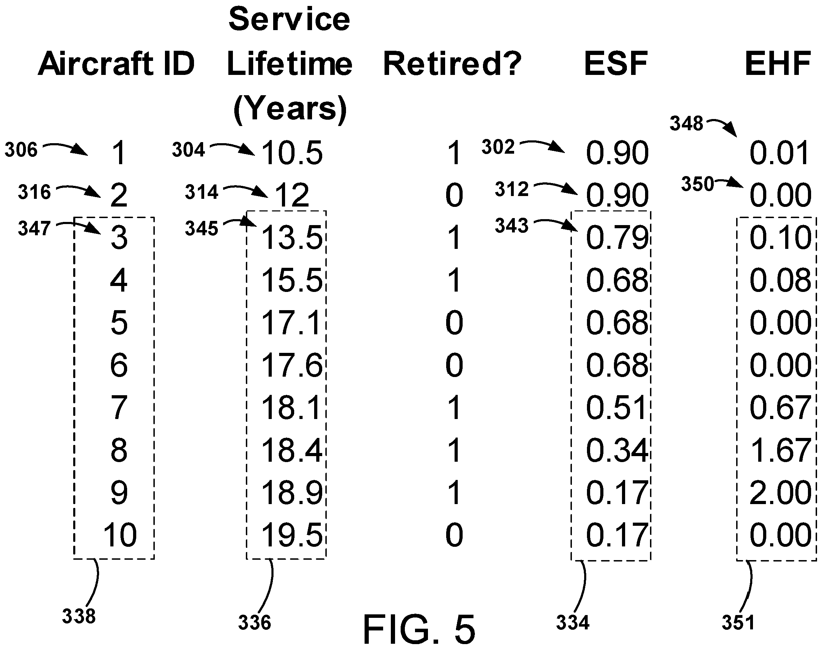

Figures 4 and 5 do, however, represent examples in which the first probability is calculated before all other probabilities that correspond to service lifetimes of other aircraft of the identified type.

Referring to Figure 4 for example, the computing system 100 can calculate a first probability 302 that the unretired representative aircraft of the identified type will have a future service lifetime that is no less than a first service lifetime 304 of a first retired aircraft 306 of the identified type.

That is, the computing system 100 can calculate that there is a 90% chance that the unretired representative aircraft will have a future service lifetime that is no less than 10.5 years, which is the service lifetime of retired Aircraft #1. In this scenario, the first service lifetime 304 is less than any other service lifetime of aircraft of the identified type (e.g., Aircraft #2-10), but in other examples that might not be the case. In Figure 4, the data is presented in order of increasing service lifetime because the computing system 100 generally calculates probabilities iteratively in order of increasing corresponding service lifetime. Details regarding how the computing system 100 calculates the first probability 302 are discussed below.

Returning to Figure 2, at block 206, the method 200 includes calculating a second probability that the unretired representative aircraft of the identified type will have a future service lifetime that is no less than a second service lifetime of a second unretired aircraft of the identified type. In the context of block 206, the unretired representative aircraft is assumed to have a service lifetime that is less than the second service lifetime of the second unretired aircraft. During typical operations related to block 206, the computing system 100 will calculate probabilities corresponding to service lifetimes of several unretired aircraft, as is described below.

With reference to probabilities, the use of ordinal numbers such as "first," "second," and "third," and so on is to distinguish respective elements rather than to denote a particular order of those elements. Figures 4 and 5 do, however, represent examples in which the second probability is calculated after a firstly calculated probability and before all other probabilities that correspond to service lifetimes of other aircraft of the identified type.

Referring to Figure 4 for example, the computing system 100 can calculate a second probability 312 that the unretired representative aircraft of the identified type will have a future service lifetime that is no less than a second service lifetime 314 of a second unretired aircraft 316 of the identified type. That is, the computing system 100 can calculate that there is a 90% chance that the unretired representative aircraft will have a future service lifetime that is no less than 12 years, which is the service lifetime of retired Aircraft #2. Details regarding how the computing system 100 calculates the second probability 312 are discussed below.

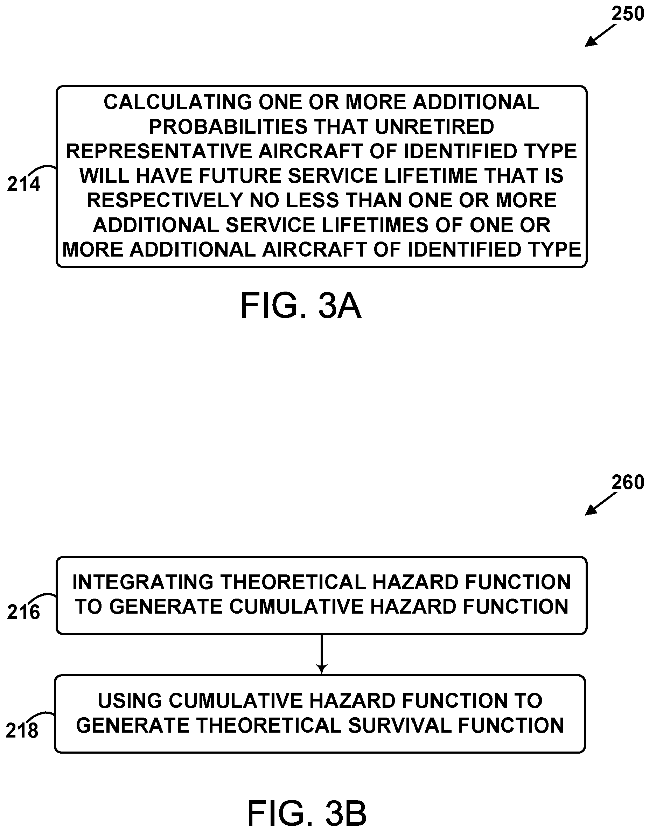

Figure 3A depicts an additional block 214 of a method 250 that is related to the method 200. At block 214, the method 250 includes calculating one or more additional probabilities that the unretired representative aircraft of the identified type will have a future service lifetime that is respectively no less than one or more additional service lifetimes of one or more additional aircraft of the identified type.

Referring to Figure 4, the computing system 100 can calculate one or more additional probabilities 334 that the unretired representative aircraft of the identified type will have a future service lifetime that is respectively no less than one or more additional service lifetimes 336 of one or more additional aircraft 338 of the identified type. For example, the computing system 100 can calculate a third probability 342 (0.90) that the unretired representative aircraft of the identified type will have a future service lifetime that is no less than a third service lifetime 344 (13.5 years) of a third unretired aircraft 346 of the identified type (Aircraft #3). In some cases, the computing system 100 can similarly calculate probabilities that correspond to service lifetimes of tens or hundreds of retired or unretired aircraft.

In the context of blocks 204 and 206, the computing system 100 will generally begin an iterative calculation process by calculating a probability that corresponds to a service lifetime that is the shortest service lifetime of any of the aircraft of the identified type, regardless of whether the shortest service lifetime corresponds to a retired or unretired aircraft. In the example of Figure 4, the computing system 100 begins the iterative calculation process by calculating the first probability 302 according to equation (1) below. In equation (1), $t_k$ is the service lifetime corresponding to the $k_{th}$ aircraft, n is the quantity of aircraft of the identified type being analyzed, and k refers to the calculated probability's place in the sequence (*e.g.*, first, second, etc.). $R_k$ is equal to 1 if the corresponding aircraft is retired and equal to 0 if the corresponding aircraft is unretired. As shown in equation (1), each probability $\hat{S}(t_k)$ of the empirical survival function (ESF) is calculated using the previously calculated probability $\hat{S}(t_{k-1})$. $\hat{S}(t_0)$ is equal to 1 by definition, and thus $\hat{S}(t_1)$ can be calculated with a simplified equation (2).

$$\hat{S}(t_k) = \hat{S}(t_{k-1})(1 - \frac{R_k}{n-k+1}) \quad (1)$$

$$\hat{S}(t_1) = 1 - \frac{R_k}{n} \quad (2)$$

Thus, in the example of Figure 4, the first probability 302 (*e.g.*, $\hat{S}(t_1)$) is equal to 1 minus a quotient of 1 divided by a total quantity of aircraft represented by (i) the one or more additional aircraft 338, (ii) the first retired aircraft 306, and (iii) the second unretired aircraft 316 (0.90=1-1/10). Accordingly, it is estimated that there is a 90% chance that a "typical" unretired aircraft of the identified type that does not yet have a service lifetime of 10.5 years will continue in service at least until the aircraft attains a service lifetime of 10.5 years.

The computing system 100 can then calculate a probability that corresponds to a service lifetime that is the next shortest service lifetime of any of the aircraft of the identified type. For example, the computing system 100 can calculate the second probability 312 (*e.g.*, $\hat{S}(t_2)$) according to equation (1): $\hat{S}(t_2)$=0.90(1-0/(10-2+1))=0.90. The computing system 100 can then calculate the third probability 342 (*e.g.*, $\hat{S}(t_3)$) according to equation (1): $\hat{S}(t_3)$=0.90(1-0/(10-3+1))=0.90. The computing system 100 can then calculate $\hat{S}(t_4)$ according to equation (1): $\hat{S}(t_4)$=0-90(1-1/(10-4+1))=0.77. The computing system 100 can calculate the remaining probabilities of the one or more probabilities 334 according to equation (1).

Figure 5 is a table showing data and outputs of calculations related to block 204 and block 206. Figure 5 corresponds to an example in which the aircraft having the third shortest service lifetime of the fleet is retired, whereas in the example depicted Figure 4, the aircraft having the third shortest service lifetime of the fleet is unretired. Otherwise, the examples depicted by Figure 4 and Figure 5 are similar. The data of Figure 5 displayed within the columns labeled Aircraft ID, Service Lifetime (Years), and Retired? can be stored as part of the data 115.

In the example of Figure 5, the one or more additional aircraft 338 includes a third retired aircraft 347 having a third service lifetime 345. According to equation (2), the first probability 302 (*e.g.*, $\hat{S}(t_1)$) is equal to 1 minus a quotient of 1 divided by a total quantity of aircraft represented by (i) the one or more additional aircraft 338, (ii) the first retired aircraft 306, and (iii) the second unretired aircraft 316 (0.90=1-1/10). Accordingly, it is estimated that there is a 90% chance that a "typical" unretired aircraft of the identified type that does not yet have a service lifetime of 10.5 years will continue in service at least until the aircraft attains a service lifetime of 10.5 years.

The computing system 100 can then calculate a probability that corresponds to a service lifetime that is the next shortest service lifetime of any of the aircraft of the identified type. For example, the computing system 100 can calculate the second probability 312 (*e.g.*, $\hat{S}(t_2)$) according to equation (1): $\hat{S}(t_2)$=0.90(1-0/(10-2+1))=0.90. The computing system 100 can then calculate the third probability 343 (*e.g.*, $\hat{S}(t_3)$) according to equation (1): $\hat{S}(t_3)$=0.90(1-1/(10-3+1))=0.79. The computing system 100 can then calculate $\hat{S}(t_4)$ according to equation (1): $\hat{S}(t_4)$=0.79(1-1/(10-4+1))=0.68. The computing system can calculate the remaining probabilities of the one or more probabilities 334 according to equation (1).

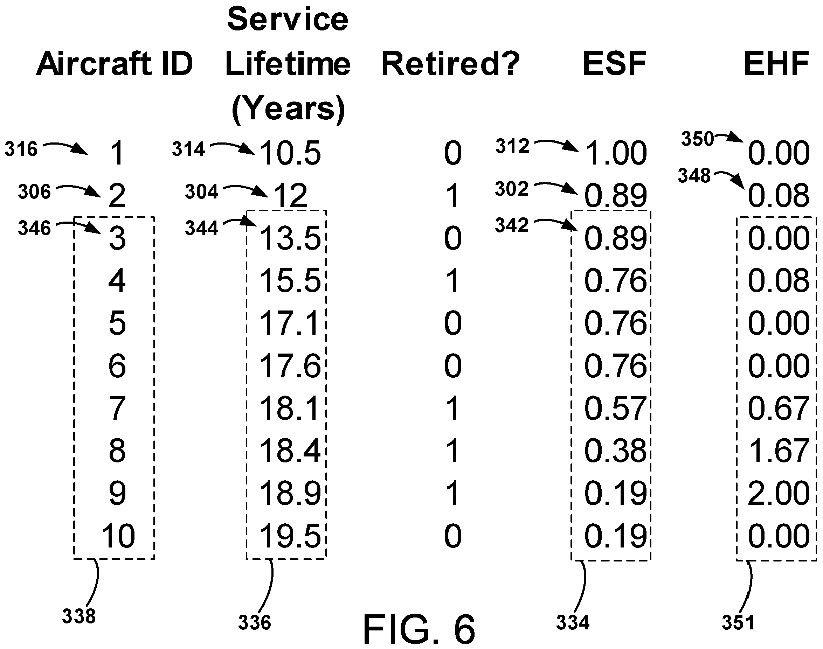

Figure 6 is a table showing data and outputs of calculations related to block 204 and block 206. Figure 6 corresponds to an example in which the aircraft having the shortest service lifetime of the fleet is unretired, the aircraft having the second shortest service lifetime is retired, and the aircraft having the third shortest service lifetime is unretired. The data of Figure 6 displayed within the columns labeled Aircraft ID, Service Lifetime (Years), and Retired? can be stored as part of the data 115.

According to equation (2), the second probability 312 (*e.g.*, $\hat{S}(t_1)$) is equal to 1 (1=1-0/10). Accordingly, it is estimated that there is a 100% chance that a "typical" unretired aircraft of the identified type that does not yet have a service lifetime of 10.5 years will continue in service at least until the aircraft attains a service lifetime of 10.5 years. It should be noted that, in the context of Figure 6, the second probability 312 pertains to the second unretired aircraft 316 which has the shortest service lifetime (the second service lifetime 314) of any service lifetime of the fleet.

The computing system 100 can then calculate a probability that corresponds to a service lifetime that is the next shortest service lifetime of any of the aircraft of the identified type. For example, the computing system 100 can calculate the first probability 302 (*e.g.*, $\hat{S}(t_2)$) according to equation (1): $\hat{S}(t_2)$=1.0(1-1/(10-2+1))=0.89. The computing system 100 can then calculate the third probability 342 (*e.g.*, $\hat{S}(t_3)$) according to equation (1): $\hat{S}(t_3)$=0.89(1-0/(10-3+1))=0.89. The computing system 100 can then calculate $\hat{S}(t_4)$ according to equation (1): $\hat{S}(t_4)$=0.89(1-1/(10-4+1))=0.76. The computing system can calculate the remaining probabilities of the one or more probabilities 334 according to equation (1).

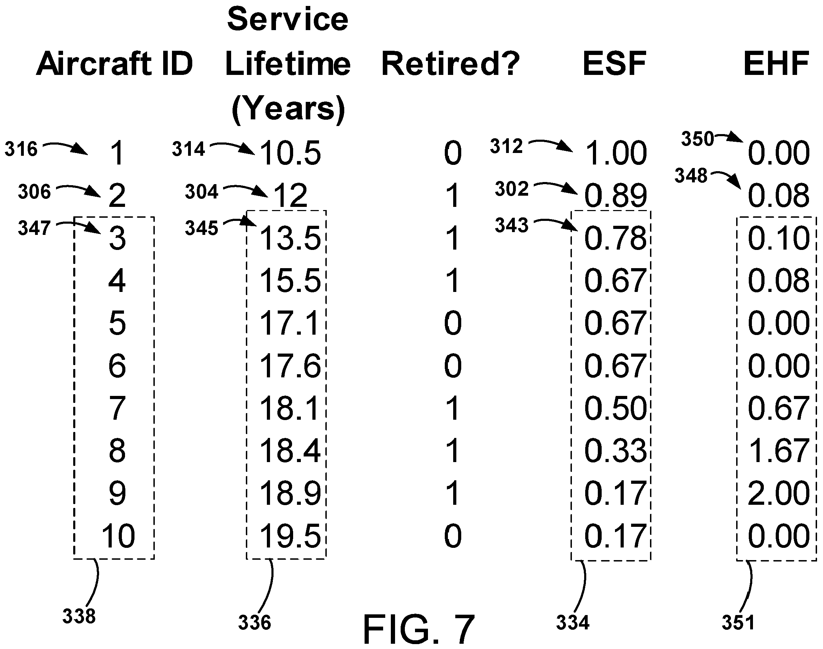

Figure 7 is a table showing data and outputs of calculations related to block 204 and block 206. Figure 7 corresponds to an example in which the aircraft having the third shortest service lifetime of the fleet is retired, whereas in the example depicted Figure 6, the aircraft having the third shortest service lifetime of the fleet is unretired. Otherwise, the examples depicted by Figure 6 and Figure 7 are similar. The data of Figure 7 displayed within the columns labeled Aircraft ID, Service Lifetime (Years), and Retired? can be stored as part of the data 115.

In the example of Figure 7, the one or more additional aircraft 338 includes a third retired aircraft 347 having a third service lifetime 345. According to equation (2), the second probability 312 (e.g., $\hat{S}(t_1)$) is equal to 1 (1=1-0/10). Accordingly, it is estimated that there is a 100% chance that a "typical" unretired aircraft of the identified type that does not yet have a service lifetime of 10.5 years will continue in service at least until the aircraft attains a service lifetime of 10.5 years.

The computing system 100 can then calculate a probability that corresponds to a service lifetime that is the next shortest service lifetime of any of the aircraft of the identified type. For example, the computing system 100 can calculate the first probability 302 (e.g., $\hat{S}(t_2)$) according to equation (1): $\hat{S}(t_2)$=1.0(1-1/(10-2+1))=0.89. The computing system 100 can then calculate the third probability 343 (e.g., $\hat{S}(t_3)$) according to equation (1): $\hat{S}(t_3)$=0.89(1-1/(10-3+1))=0.78. The computing system 100 can then calculate $\hat{S}(t_4)$ according to equation (1): $\hat{S}(t_4)$=0.78(1-1/(10-4+1))=0.67. The computing system can calculate the remaining probabilities of the one or more probabilities 334 according to equation (1).

Returning to Figure 2, at block 208, the method 200 includes, based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type.

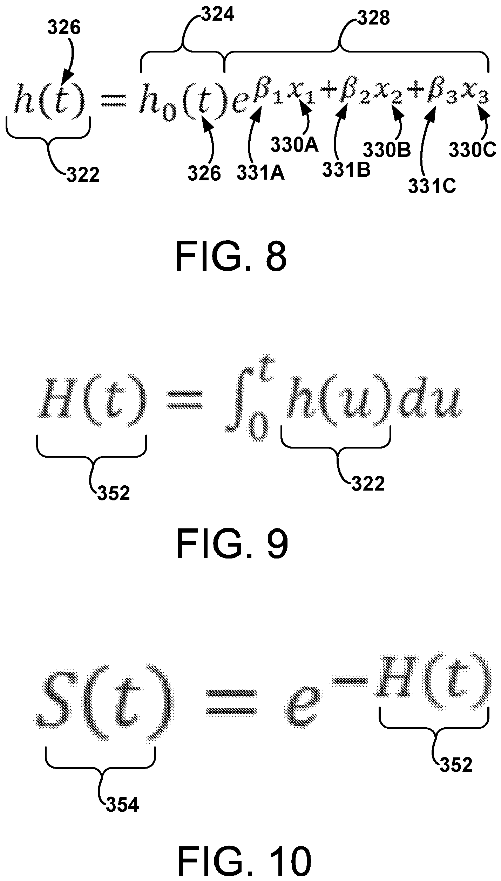

For example, the computing system 100 can use the first probability 302, the second probability 312, a first operation history 318 (see Figure 1) of the first retired aircraft 306, and a second operation history 320 (see Figure 1) of the second unretired aircraft 316 to generate a theoretical hazard function 322 (see Figure 8). Typically, the computing system 100 will also use the one or more additional probabilities 334 and operation histories of the one or more additional aircraft 338 to generate the theoretical hazard function 322.

The first operation history 318 includes data indicating an average duration per day that the first retired aircraft 306 was in operation during the first service lifetime 304. For example, the first operation history 318 can indicate an average duration per day that the first retired aircraft 306 was taxiing, taking off, landing, or engaging in flight. The first operation history 318 can also indicate an average flight cycles (e.g., a flight operation that includes one takeoff and one landing) per day that the first retired aircraft 306 performed during the first service lifetime 304. The first operation history 318 can also indicate an average duration per flight cycle (e.g., measured from gate departure to subsequent gate arrival) that was performed by the first retired aircraft 306 during the first service lifetime 304. The second operation history 320 generally includes the same information as the first operation history 318, as it pertains to the second unretired aircraft 316. Similarly, the data 115 can include operation histories that pertain to the one or more additional aircraft 338.

The theoretical hazard function 322 includes a baseline hazard factor 324 (e.g., $h_0(t)$) that is dependent on a current service lifetime 326 of the unretired representative aircraft of the identified type and a proportional hazard factor 328 that is dependent on an operation history of the unretired representative aircraft of the identified type. The operation history of the unretired representative aircraft can include an average duration per day 330A that the unretired representative aircraft was in operation during the service lifetime 326, an average flight cycles per day 330B that the unretired representative aircraft performed during the service lifetime 326, and an average duration per flight cycle 330C that was performed by the unretired representative aircraft during the service lifetime 326.

Once the computing system 100 has calculated the first probability 302, the second probability 312, and/or the one or more additional probabilities 334, the computing system 100 can then calculate hazard values that correspond to the first service lifetime 304, the second service lifetime 314, and/or the one or more additional service lifetimes 336. The computing system 100 can calculate hazard values according to equation (3) below.

$$\hat{h}(t_k) = -\frac{\hat{s}'(t_k)}{\hat{S}(t_k)} \qquad (3)$$

Referring to Figure 4 for example, the computing system 100 can calculate a first hazard value 348 (e.g., $\hat{h}(t_1)$) according to equation (3) (0.01=-((0.90-1)/(10.5))/0.90). The computing system 100 can also calculate a second hazard value 350 according to equation (3) (0.00=-((0.90-0.90)/(12-10.5))/0.90). The computing system 100 can also use equation (3) to calculate one or more hazard values 351 that correspond respectively to the one or more additional service lifetimes 336. The first hazard value 348, the second hazard value 350, and the one or more hazard values 351 collectively form an empirical hazard function (EHF). The hazard values that define the EHF represent relative risks that an unretired representative aircraft of the identified type will be retired immediately after the unretired representative aircraft attains the corresponding service lifetime. For example, the first hazard value 348 represents a risk that the unretired representative aircraft will be retired immediately after attaining a service lifetime of 10.5 years. Higher hazard values are associated with a higher risk. Equation (3) can be used to calculate the first hazard value 348, the second hazard value 350, and the one or more additional hazard values 351 that are shown in the examples of Figure 6, Figure 7, and Figure 8, as well.

As such, the theoretical hazard function 322 is equal to the baseline hazard factor 324 multiplied by the proportional hazard factor 328. The baseline hazard factor 324 and the proportional hazard factor 328 are typically determined experimentally via regression analysis. Referring to Figure 4 for example, the computing system 100 can perform regression analysis (*e.g.*, least squares, maximum likelihood, etc.) to generate the baseline hazard factor 324. The baseline hazard factor 324 could take the form of any function that is non-decreasing with respect to time, in accordance with the fact that likelihood of aircraft retirement generally correlates with increased wear and tear that occurs over an increased service lifetime. That is, the computing system 100 can use regression analysis to determine the form of the baseline hazard factor 324 and/or coefficients of the baseline hazard factor 324 that best "fits" the EHF defined by the first hazard value 348, the second hazard value 350, and the one or more additional hazard values 351. The computing system 100 can also use regression analysis to determine a first coefficient 331A, a second coefficient 331B, and a third coefficient 331C of the proportional hazard factor 328 that best "fits" the EHF defined by the first hazard value 348, the second hazard value 350, and the one or more additional hazard values 351.

In one particular example, it has been observed that, with regard to a particular set of aircraft of a common type, the first coefficient 331A was determined to be 0.10499 with a p-value of 0.00046, the second coefficient 331B was calculated to be 1.08604 with a p-value of about $2 \times 10^{-16}$, and the third coefficient 331C was calculated to be 0.32733 with a p-value of $2.9 \times 10^{-10}$.

Returning to Figure 2, at block 210, the method 200 includes, based on (i) the theoretical hazard function, (ii) the second service lifetime, and (iii) the second operation history, calculating a quantity of a component to maintain in inventory. In this context, the component is configured for use on the second unretired aircraft. For example, the computing system 100 can use (at least) the theoretical hazard function 322, the second service lifetime 314, and the second operation history 320 to calculate a quantity of a component (*e.g.*, a turbofan blade) to maintain in inventory. Typically, the computing system 100 will use service lifetimes and operation histories corresponding to many (*e.g.*, all) unretired aircraft of the identified type to calculate the quantity of the component to maintain in inventory. As described below, this process can involve performing some intermediate actions before the quantity of the component to maintain in inventory is calculated.

Figure 3B depicts an additional block 216 and an additional block 218 of a method 260 that is related to the method 200. At block 216, the method 260 includes integrating the theoretical hazard function to generate a cumulative hazard function. At block 218, the method 260 includes using the cumulative hazard function to generate a theoretical survival function. In this context, the theoretical survival function is generally proportional to Euler's number raised to an additive inverse of the cumulative hazard function.

For example, the computing system 100 can integrate the theoretical hazard function 322 to generate a cumulative hazard function 352 as shown in Figure 9. At any value of t (any potential service lifetime), the cumulative hazard function 352 represents the cumulative risk that an unretired representative aircraft of the identified type will be retired before or at the time the unretired representative aircraft attains the service lifetime that is equal to t. As such, the computing system 100 will typically integrate the theoretical hazard function 322 many times to generate outputs that correspond respectively to many values of t to numerically generate the cumulative hazard function 352. Subsequently, the computing system 100 can use the cumulative hazard function 352 to generate a theoretical survival function 354 as shown in Figure 10.

The theoretical survival function 354 is similar to the empirical survival function (ESF) discussed above with at least one notable difference. The ESF is calculated based on observed retirement statuses of aircraft of the identified type and equations (1) and (2), and can only be used to predict a survival probability of an unretired representative aircraft based on a current service lifetime of the unretired representative aircraft. The theoretical survival function 354, however, also accounts for operation histories of the analyzed retired or unretired aircraft, and therefore can be used to (*e.g.*, more accurately) predict survival probability for an unretired representative aircraft based on the operation history of the unretired representative aircraft.

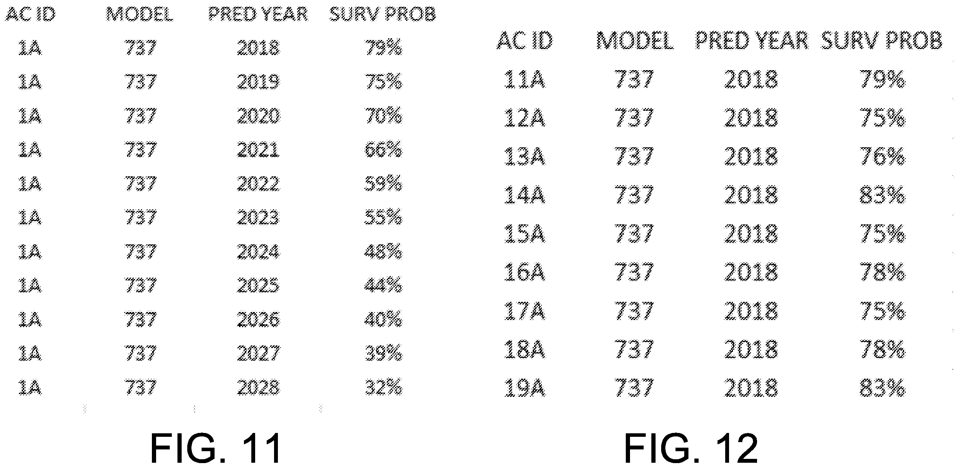

For example, Figure 11 shows survival probabilities ("SURV PROB") calculated by the computing system 100 for a particular unretired aircraft #1A at various times in the future. For example, the aircraft #1A is estimated to have a 79% chance of being unretired at the end of the year 2018, a 75% chance of being unretired at the end of the year 2019, and so on. As shown in Figure 11, the survival probabilities that are outputs of the theoretical survival function 354 of Figure 10 monotonically decrease as one looks further into the future. If one is interested in determining demand for a particular aircraft component over a future period of time, it could make sense to look at survival probabilities for an entire fleet of aircraft of a common type over that future period of time.

For example, Figure 12 shows survival probabilities calculated by the computing system 100 for aircraft numbered #11A-19A. The survival probabilities shown in Figure 12 are probabilities that the corresponding aircraft will continue to be unretired throughout the year 2018. For example, the aircraft #11A is estimated to have a 79% chance of remaining unretired throughout 2018, the aircraft #12A is estimated to have a 75% chance of remaining unretired throughout 2018, the aircraft #13A is estimated to have a 76% chance of remaining unretired throughout 2018, and so on. These probabilities could be calculated by the computing system 100 using the theoretical survival function 354, which can lead to more accurate predictions because the theoretical survival function 354 accounts for individual aircraft operation histories as well as current service lifetimes.

More specifically, the computing system 100 can "plug" the current service lifetime of "aircraft 1A" into the baseline hazard factor 324, plug a known average duration per day that "aircraft 1A" was in operation during its service lifetime into the average duration per day 330A, plug a known average flight cycles per day that "aircraft 1A" performed during its service lifetime into the average flight cycles per day 330B, and plug a known average duration per flight cycle that "aircraft 1A" performed during its service lifetime into the average duration per flight cycle 330C. The survival probability of 79% then results from using the equations of Figure 9 and Figure 10, as discussed above.

Calculating the quantity of the component to maintain in inventory can involve first calculating a quantity of unretired aircraft that are expected to remain in service throughout a period of time, and then, based on the calculated quantity of unretired aircraft, calculating the quantity of the component to maintain in inventory.

Referring to Figure 12 for example, the computing system 100 can determine that 7.02 unretired aircraft of the identified type are expected to remain unretired throughout 2018 ($7.02=0.79+0.75+0.76+0.83+0.75+0.78+0.75+0.78+0.83$). Assuming each unretired aircraft depicted in Figure 12 uses two turbofan blades, for example, the "active" number of turbofan blades for the entire fleet of aircraft of the identified type will be approximately equal to 14 ($14\sim7.02 \times 2$). If turbofan blades are expected to be replaced every two years as an example, then the demand for replacement turbofan blades during 2018 would be about 7. Accordingly, the computing system 100 can determine that 7 turbofan blades should be maintained inventory. In some examples, the component replacement rate is unknown, and the computing system 100 might calculate the quantity of the component to maintain in inventory to be equal to a percentage (*e.g.*, 10%, 20%, etc.) of the "active" number of components expected to be used by the fleet over the future period of time.

In another example, the computing system 100 can analyze a portion of the data 115 that indicates historical active part levels by year and threshold reordering quantities of components that corresponds to each year. For example, the data 115 might indicate that in 2014 the active number of a particular component was 250 and the threshold quantity was 50, in 2015 the active number of the particular component was 248 and the threshold quantity was 50, in 2016 the active number of the particular component was 248 and the threshold quantity was 48, and in 2017 the active number of the particular component was 240 and the threshold quantity was 46.

As such, the computing system 100 can determine a threshold reordering ratio for the particular component as follows: $(50+50+48+46)/(250+248+248+240)\sim0.197$. The computing system 100 can then multiply the threshold ratio (*e.g.*, 0.197) by the predicted quantity of active components (*e.g.*, 210) for the year 2018 to generate a threshold reordering quantity of 41 ($41\sim210*0.197$).

Returning to Figure 2, at block 212, the method 200 includes initiating a process to maintain the calculated quantity of the component in inventory. For example, the computing system 100 might send an automated message (*e.g.*, email) to an account monitored by an inventory specialist. As an example, the message can indicate the calculated quantity of the component so that the inventory specialist can place orders or otherwise arrange for the target quantity of the component to be maintained in inventory.

In another example, the computing system 100 accesses a portion of the data 115 that indicates a quantity of the component that is currently in inventory and makes a determination that the quantity of the component that is currently in inventory is less than the calculated quantity of the component to maintain in inventory. Based on the determination, the computing system 100 can generate an indication, via the user interface 110, that the quantity of the component that is currently in inventory is less than the calculated quantity of the component to maintain in inventory.

Examples of the present disclosure can thus relate to one of the enumerated clauses (EC) listed below.

EC 1 is a computing system configured to perform functions for calculating a quantity of a component to maintain in inventory, the computing system comprising: one or more processors; and one or more non-transitory computer readable media storing instructions, that when executed by the one or more processors, cause the computing system to perform functions comprising: identifying a type of aircraft for analysis; calculating a first probability that an unretired representative aircraft of the identified type will have a future service lifetime that is no less than a first service lifetime of a first retired aircraft of the identified type; calculating a second probability that the unretired representative aircraft of the identified type will have a future service lifetime that is no less than a second service lifetime of a second unretired aircraft of the identified type; based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type; based on (i) the theoretical hazard function, (ii) the second service lifetime, and (iii) the second operation history, calculating a quantity of a component to maintain in inventory, wherein the component is configured for use on the second unretired aircraft; and initiating a process to maintain the calculated quantity of the component in inventory.

EC 2 is the computing device of EC 1, wherein identifying the type of aircraft for analysis comprises selecting the type from a set of types based on the type having been least recently identified for analysis among the set of types.

EC 3 is the computing device of any of ECs 1 or 2, wherein calculating the first probability comprises calculating the first probability using first data that indicates that the first retired aircraft has been retired.

EC 4 is the computing system of any of ECs 1-3, wherein calculating the second probability comprises calculating the second probability using second data that indicates that the second unretired aircraft has not been retired.

EC 5 is the computing system of any of ECs 1-4, the functions further comprising: calculating one or more additional probabilities that the unretired representative aircraft of the identified type will have a future service lifetime that is respectively no less than one or more additional service lifetimes of one or more additional aircraft of the identified type, wherein the first service lifetime is less than (i) the second service lifetime and (ii) the one or more additional service lifetimes, and wherein the first probability is equal to 1 minus a quotient of 1 divided by a total quantity of aircraft represented by (i) the one or more additional aircraft, (ii) the first retired aircraft, and (iii) the second unretired aircraft.

EC 6 is the computing system of EC 5, wherein the second service lifetime is less than the one or more additional service lifetimes, and wherein the second probability is equal to the first probability.

EC 7 is the computing system of EC 6, wherein calculating the one or more additional probabilities comprises calculating a third probability that the unretired representative aircraft of the identified type will have a future service lifetime that is no less than a third service lifetime of a third unretired aircraft of the identified type, wherein the second service lifetime is less than the third service lifetime, and wherein the third probability is equal to the second probability.

EC 8 is the computing system of EC 6, wherein calculating the one or more additional probabilities comprises calculating a third probability that the unretired representative aircraft of the identified type will have a future service lifetime that is no less than a third service lifetime of a third retired aircraft of the identified type, wherein the second service lifetime is less than the third service lifetime, and wherein the third probability is equal to the second probability multiplied by a difference of 1 minus a quotient of 1 divided by the total quantity of aircraft minus 2.

EC 9 is the computing system of any of ECs 1-4, the functions further comprising: calculating one or more additional probabilities that the unretired representative aircraft of the identified type will have a future service lifetime that is respectively no less than one or more additional service lifetimes of one or more additional aircraft of the identified type, wherein the first service lifetime is greater than the second service lifetime and less than the one or more additional service lifetimes, and wherein the first probability is equal to a difference of 1 minus a quotient of 1 divided by a difference of (A) a total quantity of aircraft represented by (i) the one or more additional aircraft, (ii) the first retired aircraft, and (iii) the second unretired aircraft minus (B) 1. EC 10 is the computing system of EC 9, wherein the second probability is equal to 1.

EC 11 is the computing system of EC 10, wherein calculating the one or more additional probabilities comprises calculating a third probability that the unretired representative aircraft of the identified type will have a future service lifetime that is no less than a third service lifetime of a third unretired aircraft of the identified type, wherein the first service lifetime is less than the third service lifetime, and wherein the third probability is equal to the first probability.

EC 12 is the computing system of EC 10, wherein calculating the one or more additional probabilities comprises calculating a third probability that the unretired representative aircraft of the identified type will have a future service lifetime that is no less than a third service lifetime of a third retired aircraft of the identified type, wherein the first service lifetime is less than the third service lifetime, and wherein the third probability is equal to the first probability multiplied by a difference of 1 minus a quotient of 1 divided by a difference of the total quantity of aircraft minus 2.

EC 13 is the computing system of any of ECs 1-12, wherein the first probability and the second probability are outputs of an empirical survival function, and wherein generating the theoretical hazard function comprises: calculating a first hazard value that is equal to an additive inverse of a quotient of a first order time-derivative of the empirical survival function evaluated with respect to the first service lifetime divided by the empirical survival function evaluated with respect to the first service lifetime; calculating a second hazard value that is equal to an additive inverse of a quotient of a first order time-derivative of the empirical survival function evaluated with respect to the second service lifetime divided by the empirical survival function evaluated with respect to the second service lifetime; and using the first hazard value and the second hazard value to generate the theoretical hazard function.

EC 14 is the computing system of any of ECs 1-13, wherein generating the theoretical hazard function comprises calculating a first coefficient, a second coefficient, and a third coefficient of the proportional hazard factor, wherein the proportional hazard factor is equal to Euler's number raised to a sum of at least (a) the first coefficient multiplied by an average duration per day that the unretired representative aircraft was in operation during a service lifetime of the unretired representative aircraft, (b) the second coefficient multiplied by an average flight cycles per day that the unretired representative aircraft performed during the service lifetime of the unretired representative aircraft, and (c) the third coefficient multiplied by an average duration per flight cycle that was performed by the unretired representative aircraft during the service lifetime of the unretired representative aircraft.

EC 15 is the computing system of any of ECs 1-14, wherein generating the theoretical hazard function comprises performing a least squares regression analysis or performing a maximum likelihood regression analysis.

EC 16 is the computing system of any of ECs 1-15, the functions further comprising: integrating the theoretical hazard function to generate a cumulative hazard function; and using the cumulative hazard function to generate a theoretical survival function, wherein the theoretical survival function is proportional to Euler's number raised to an additive inverse of the cumulative hazard function, and wherein calculating the quantity of the component to maintain in inventory comprises using the theoretical survival function to calculate the quantity of the component to maintain in inventory.

EC 17 is the computing system of any of ECs 1-16, wherein calculating the quantity of the component to maintain in inventory comprises: calculating a quantity of unretired aircraft that are expected to remain in service throughout a period of time; and based on the calculated quantity of unretired aircraft, calculating the quantity of the component to maintain in inventory. EC 18 is the computing system of any of ECs 1-17, wherein initiating the process to maintain the calculated quantity of the component in inventory comprises: accessing data indicating a quantity of the component that is currently in inventory; making a determination that the quantity of the component that is currently in inventory is less than the calculated quantity of the component to maintain in inventory; and based on the determination, generating an indication, via a user interface of the computing system, that the quantity of the component that is currently in inventory is less than the calculated quantity of the component to maintain in inventory.

EC 19 is a method for calculating a quantity of a component to maintain in inventory, the method comprising: identifying a type of aircraft for analysis; calculating a first probability that an unretired representative aircraft of the identified type will have a future service lifetime that is no less than a first service lifetime of a first retired aircraft of the identified type; calculating a second probability that the unretired representative aircraft of the identified type will have a future service lifetime that is no less than a second service lifetime of a second unretired aircraft of the identified type; based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type; based on (i) the theoretical hazard function, (ii) the second service lifetime, and (iii) the second operation history, calculating a quantity of a component to maintain in inventory, wherein the component is configured for use on the second unretired aircraft; and initiating a process to maintain the calculated quantity of the component in inventory.

EC 20 is one or more non-transitory computer readable media storing instructions that, when executed by a computing system, cause the computing system to perform functions comprising: identifying a type of aircraft for analysis; calculating a first probability that an unretired representative aircraft of the identified type will have a future service lifetime that is no less than a first service lifetime of a first retired aircraft of the identified type; calculating a second probability that the unretired representative aircraft of the identified type will have a future service lifetime that is no less than a second service lifetime of a second unretired aircraft of the identified type; based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type; based on (i) the theoretical hazard function, (ii) the second service lifetime, and (iii) the second operation history, calculating a quantity of a component to maintain in inventory, wherein the component is configured for use on the second unretired aircraft; and initiating a process to maintain the calculated quantity of the component in inventory.

Further, the disclosure comprises embodiments according to the following clauses:

Clause 1. A computing system configured to perform functions for calculating a quantity of a component to maintain in inventory, the computing system comprising:

one or more processors; and
one or more non-transitory computer readable media storing instructions, that when executed by the one or more processors, cause the computing system to perform functions comprising:

identifying a type of aircraft for analysis;
calculating a first probability that an unretired representative aircraft of the identified type will have a future service lifetime that is no less than a first service lifetime of a first retired aircraft of the identified type;
calculating a second probability that the unretired representative aircraft of the identified type will have a future service lifetime that is no less than a second service lifetime of a second unretired aircraft of the identified type;
based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type;
based on (i) the theoretical hazard function, (ii) the second service lifetime, and (iii) the second operation history, calculating a quantity of a component to maintain in inventory, wherein the component is configured for use on the second unretired aircraft; and
initiating a process to maintain the calculated quantity of the component in inventory.

Clause 2. The computing system of claim 1, wherein identifying the type of aircraft for analysis comprises selecting the type from a set of types based on the type having been least recently identified for analysis among the set of types.

Clause 3. The computing system of claim 1, wherein calculating the first probability comprises calculating the first probability using first data that indicates that the first retired aircraft has been retired.

Clause 4. The computing system of claim 1, wherein calculating the second probability comprises calculating the second probability using second data that indicates that the second unretired aircraft has not been retired.

Clause 5. The computing system of claim 1, the functions further comprising:

calculating one or more additional probabilities that the unretired representative aircraft of the identified type will have a future service lifetime that is respectively no less than one or more additional service lifetimes of one or more additional aircraft of the identified type,
wherein the first service lifetime is less than (i) the second service lifetime and (ii) the one or more additional service lifetimes, and
wherein the first probability is equal to 1 minus a quotient of 1 divided by a total quantity of aircraft represented by (i) the one or more additional aircraft, (ii) the first retired aircraft, and (iii) the second unretired aircraft.

Clause 6. The computing system of claim 5, wherein the second service lifetime is less than the one or more additional service lifetimes, and wherein the second probability is equal to the first probability.

Clause 7. The computing system of claim 6, wherein calculating the one or more additional probabilities comprises calculating a third probability that the unretired representative aircraft of the identified type will have a future service lifetime that is no less than a third service lifetime of a third unretired aircraft of the identified type, wherein the second service lifetime is less than the third service lifetime, and wherein the third probability is equal to the second probability.

Clause 8. The computing system of claim 6, wherein calculating the one or more additional probabilities comprises calculating a third probability that the unretired representative aircraft of the identified type will have a future service lifetime that is no less than a third service lifetime of a third retired aircraft of the identified type, wherein the second service lifetime is less than the third service lifetime, and
wherein the third probability is equal to the second probability multiplied by a difference of 1 minus a quotient of 1 divided by the total quantity of aircraft minus 2.

Clause 9. The computing system of claim 1, the functions further comprising:

calculating one or more additional probabilities that the unretired representative aircraft of the identified type will have a future service lifetime that is respectively no less than one or more additional service lifetimes of one or more additional aircraft of the identified type,
wherein the first service lifetime is greater than the second service lifetime and less than the one or more additional service lifetimes, and
wherein the first probability is equal to a difference of 1 minus a quotient of 1 divided by a difference of (A) a total quantity of aircraft represented by (i) the one or more additional aircraft, (ii) the first retired aircraft, and (iii) the second unretired aircraft minus (B) 1.

Clause 10. The computing system of claim 9, wherein the second probability is equal to 1.

Clause 11. The computing system of claim 10, wherein calculating the one or more additional probabilities comprises calculating a third probability that the unretired representative aircraft of the identified type will have a future service lifetime that is no less than a third service lifetime of a third unretired aircraft of the identified type,
wherein the first service lifetime is less than the third service lifetime, and
wherein the third probability is equal to the first probability.

Clause 12. The computing system of claim 10, wherein calculating the one or more additional probabilities comprises calculating a third probability that the unretired representative aircraft of the identified type will have a future service lifetime that is no less than a third service lifetime of a third retired aircraft of the identified type,
wherein the first service lifetime is less than the third service lifetime, and
wherein the third probability is equal to the first probability multiplied by a difference of 1 minus a quotient of 1 divided by a difference of the total quantity of aircraft minus 2.

Clause 13. The computing system of claim 1, wherein the first probability and the second probability are outputs of an empirical survival function, and wherein generating the theoretical hazard function comprises:

calculating a first hazard value that is equal to an additive inverse of a quotient of a first order time-derivative of the empirical survival function evaluated with respect to the first service lifetime divided by the empirical survival function evaluated with respect to the first service lifetime;
calculating a second hazard value that is equal to an additive inverse of a quotient of a first order time-derivative of the empirical survival function evaluated with respect to the second service lifetime divided by the empirical survival function evaluated with respect to the second service lifetime; and
using the first hazard value and the second hazard value to generate the theoretical hazard function.

Clause 14. The computing system of claim 1, wherein generating the theoretical hazard function comprises calculating a first coefficient, a second coefficient, and a third coefficient of the proportional hazard factor, wherein the proportional hazard factor is equal to Euler's number raised to a sum of at least (a) the first coefficient multiplied by an average duration per day that the unretired representative aircraft was in operation during a service lifetime of the unretired representative aircraft, (b) the second coefficient multiplied by an average flight cycles per day that the unretired representative aircraft performed during the service lifetime of the unretired representative aircraft, and (c) the third coefficient multiplied by an average duration per flight cycle that was performed by the unretired representative aircraft during the service lifetime of the unretired representative aircraft.

Clause 15. The computing system of claim 1, wherein generating the theoretical hazard function comprises performing a least squares regression analysis or performing a maximum likelihood regression analysis.

Clause 16. The computing system of claim 1, the functions further comprising:

integrating the theoretical hazard function to generate a cumulative hazard function; and
using the cumulative hazard function to generate a theoretical survival function,
wherein the theoretical survival function is proportional to Euler's number raised to an additive inverse of the cumulative hazard function, and
wherein calculating the quantity of the component to maintain in inventory comprises using the theoretical survival function to calculate the quantity of the component to maintain in inventory.

Clause 17. The computing system of claim 1, wherein calculating the quantity of the component to maintain in inventory comprises:

calculating a quantity of unretired aircraft that are expected to remain in service throughout a period of time; and

based on the calculated quantity of unretired aircraft, calculating the quantity of the component to maintain in inventory.

Clause 18. The computing system of claim 1, wherein initiating the process to maintain the calculated quantity of the component in inventory comprises:

accessing data indicating a quantity of the component that is currently in inventory;

making a determination that the quantity of the component that is currently in inventory is less than the calculated quantity of the component to maintain in inventory; and

based on the determination, generating an indication, via a user interface of the computing system, that the quantity of the component that is currently in inventory is less than the calculated quantity of the component to maintain in inventory.

Clause 19. A method for calculating a quantity of a component to maintain in inventory, the method comprising:

identifying a type of aircraft for analysis;

calculating a first probability that an unretired representative aircraft of the identified type will have a future service lifetime that is no less than a first service lifetime of a first retired aircraft of the identified type;

calculating a second probability that the unretired representative aircraft of the identified type will have a future service lifetime that is no less than a second service lifetime of a second unretired aircraft of the identified type;

based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type;

based on (i) the theoretical hazard function, (ii) the second service lifetime, and (iii) the second operation history, calculating a quantity of a component to maintain in inventory, wherein the component is configured for use on the second unretired aircraft; and

initiating a process to maintain the calculated quantity of the component in inventory.

Clause 20. One or more non-transitory computer readable media storing instructions that, when executed by a computing system, cause the computing system to perform functions comprising:

identifying a type of aircraft for analysis;

calculating a first probability that an unretired representative aircraft of the identified type will have a future service lifetime that is no less than a first service lifetime of a first retired aircraft of the identified type;

calculating a second probability that the unretired representative aircraft of the identified type will have a future service lifetime that is no less than a second service lifetime of a second unretired aircraft of the identified type;

based on (i) the first probability, (ii) the second probability, (iii) a first operation history of the first retired aircraft, and (iv) a second operation history of the second unretired aircraft, generating a theoretical hazard function that includes a baseline hazard factor that is dependent on a current service lifetime of the unretired representative aircraft of the identified type and a proportional hazard factor that is dependent on an operation history of the unretired representative aircraft of the identified type;

based on (i) the theoretical hazard function, (ii) the second service lifetime, and (iii) the second operation history, calculating a quantity of a component to maintain in inventory, wherein the component is configured for use on the second unretired aircraft; and

initiating a process to maintain the calculated quantity of the component in inventory.

The description of the different advantageous arrangements has been presented for purposes of illustration and description, and is not intended to be exhaustive or limited to the examples in the form disclosed. Many modifications and variations will be apparent to those of ordinary skill in the art. Further, different advantageous examples may describe different advantages as compared to other advantageous examples. The example or examples selected are chosen and described in order to explain the principles of the examples, the practical application, and to enable others of ordinary skill in the art to understand the disclosure for various examples with various modifications as are suited to the particular use contemplated.

## Claims

1. A computing system 100 configured to perform functions for calculating a quantity of a component to maintain in inventory, the computing system comprising:

   one or more processors 102; and
   one or more non-transitory computer readable media 104 storing instructions 114, that when executed by the one or more processors, cause the computing system to perform functions comprising:

   202 identifying a type of aircraft for analysis;
   204 calculating a first probability 302 that an unretired representative aircraft of the identified type will have a future service lifetime that is no less than a first service lifetime 304 of a first retired aircraft 306 of the identified type;
   206 calculating a second probability 312 that the unretired representative aircraft of the identified type will have a future service lifetime that is no less than a second service lifetime 314 of a second unretired aircraft 316 of the identified type;
   208 based on (i) the first probability, (ii) the second probability, (iii) a first operation history 318 of the first retired aircraft, and (iv) a second operation history 320 of the second unretired aircraft, generating a theoretical hazard function 322 that includes a baseline hazard factor 324 that is dependent on a current service lifetime 326 of the unretired representative aircraft of the identified type and a proportional hazard factor 328 that is dependent on an operation history 330A-D of the unretired representative aircraft of the identified type;
   210 based on (i) the theoretical hazard function, (ii) the second service lifetime, and (iii) the second operation history, calculating a quantity 332 of a component to maintain in inventory, wherein the component is configured for use on the second unretired aircraft; and
   212 initiating a process to maintain the calculated quantity of the component in inventory.

2. The computing system of claim 1, wherein identifying the type of aircraft for analysis comprises selecting the type from a set of types based on the type having been least recently identified for analysis among the set of types.

3. The computing system of claim 1, wherein calculating the first probability comprises calculating the first probability using first data that indicates that the first retired aircraft has been retired.

4. The computing system of claim 1, wherein calculating the second probability comprises calculating the second probability using second data that indicates that the second unretired aircraft has not been retired.

5. The computing system of claim 1, the functions further comprising:

   214 calculating one or more additional probabilities 334 that the unretired representative aircraft of the identified type will have a future service lifetime that is respectively no less than one or more additional service lifetimes 336 of one or more additional aircraft 338 of the identified type,
   wherein the first service lifetime 304 is less than (i) the second service lifetime 314 and (ii) the one or more additional service lifetimes 336, and
   wherein the first probability 302 is equal to 1 minus a quotient of 1 divided by a total quantity of aircraft represented by (i) the one or more additional aircraft 338, (ii) the first retired aircraft 306, and (iii) the second unretired aircraft 316.

6. The computing system of claim 5,
   wherein the second service lifetime 314 is less than the one or more additional service lifetimes 336, and
   wherein the second probability 312 is equal to the first probability 302.

7. The computing system of claim 6, wherein calculating the one or more additional probabilities comprises calculating a third probability 342 that the unretired representative aircraft of the identified type will have a future service lifetime that is no less than a third service lifetime 344 of a third unretired aircraft 346 of the identified type,
   wherein the second service lifetime 314 is less than the third service lifetime 344, and
   wherein the third probability 342 is equal to the second probability 312.

8. The computing system of claim 6, wherein calculating the one or more additional probabilities comprises calculating a third probability 343 that the unretired representative aircraft of the identified type will have a future service lifetime that is no less than a third service lifetime 345 of a third retired aircraft 347 of the identified type,
   wherein the second service lifetime 314 is less than the third service lifetime 345, and
   wherein the third probability 343 is equal to the second probability 312 multiplied by a difference of 1 minus a quotient of 1 divided by the total quantity of aircraft minus 2.

9. The computing system of claim 1, the functions further comprising:

214 calculating one or more additional probabilities 334 that the unretired representative aircraft of the identified type will have a future service lifetime that is respectively no less than one or more additional service lifetimes 336 of one or more additional aircraft 338 of the identified type,

wherein the first service lifetime 304 is greater than the second service lifetime 314 and less than the one or more additional service lifetimes 336, and

wherein the first probability 302 is equal to a difference of 1 minus a quotient of 1 divided by a difference of (A) a total quantity of aircraft represented by (i) the one or more additional aircraft, (ii) the first retired aircraft, and (iii) the second unretired aircraft minus (B) 1.

10. The computing system of claim 9, wherein the second probability 312 is equal to 1.

11. The computing system of claim 10, wherein calculating the one or more additional probabilities comprises calculating a third probability 342 that the unretired representative aircraft of the identified type will have a future service lifetime that is no less than a third service lifetime 344 of a third unretired aircraft 346 of the identified type,

wherein the first service lifetime 304 is less than the third service lifetime 344, and

wherein the third probability 342 is equal to the first probability 302.

12. The computing system of claim 10, wherein calculating the one or more additional probabilities comprises calculating a third probability 343 that the unretired representative aircraft of the identified type will have a future service lifetime that is no less than a third service lifetime 345 of a third retired aircraft 347 of the identified type,

wherein the first service lifetime 304 is less than the third service lifetime 345, and

wherein the third probability 343 is equal to the first probability 302 multiplied by a difference of 1 minus a quotient of 1 divided by a difference of the total quantity of aircraft minus 2.

13. The computing system of claim 1, wherein the first probability 302 and the second probability 312 are outputs of an empirical survival function 342, and wherein generating the theoretical hazard function comprises:

calculating a first hazard value 348 that is equal to an additive inverse of a quotient of a first order time-derivative of the empirical survival function evaluated with respect to the first service lifetime divided by the empirical survival function evaluated with respect to the first service lifetime;

calculating a second hazard value 350 that is equal to an additive inverse of a quotient of a first order time-derivative of the empirical survival function evaluated with respect to the second service lifetime divided by the empirical survival function evaluated with respect to the second service lifetime; and

using the first hazard value and the second hazard value to generate the theoretical hazard function.

14. A method 200 for calculating a quantity of a component to maintain in inventory, the method comprising:

202 identifying a type of aircraft for analysis;

204 calculating a first probability 302 that an unretired representative aircraft of the identified type will have a future service lifetime that is no less than a first service lifetime 304 of a first retired aircraft 306 of the identified type;

206 calculating a second probability 312 that the unretired representative aircraft of the identified type will have a future service lifetime that is no less than a second service lifetime 314 of a second unretired aircraft 316 of the identified type;

208 based on (i) the first probability, (ii) the second probability, (iii) a first operation history 318 of the first retired aircraft, and (iv) a second operation history 320 of the second unretired aircraft, generating a theoretical hazard function 322 that includes a baseline hazard factor 324 that is dependent on a current service lifetime 326 of the unretired representative aircraft of the identified type and a proportional hazard factor 328 that is dependent on an operation history 330 of the unretired representative aircraft of the identified type;

210 based on (i) the theoretical hazard function, (ii) the second service lifetime, and (iii) the second operation history, calculating a quantity 332 of a component to maintain in inventory, wherein the component is configured for use on the second unretired aircraft; and

212 initiating a process to maintain the calculated quantity of the component in inventory.

15. One or more non-transitory computer readable media 104 storing instructions 114 that, when executed by a computing system 100, cause the computing system to perform functions comprising:

202 identifying a type of aircraft for analysis;

**EP 3 605 418 A1**

204 calculating a first probability 302 that an unretired representative aircraft of the identified type will have a future service lifetime that is no less than a first service lifetime 304 of a first retired aircraft 306 of the identified type;

206 calculating a second probability 312 that the unretired representative aircraft of the identified type will have a future service lifetime that is no less than a second service lifetime 314 of a second unretired aircraft 316 of the identified type;

208 based on (i) the first probability, (ii) the second probability, (iii) a first operation history 318 of the first retired aircraft, and (iv) a second operation history 320 of the second unretired aircraft, generating a theoretical hazard function 322 that includes a baseline hazard factor 324 that is dependent on a current service lifetime 326 of the unretired representative aircraft of the identified type and a proportional hazard factor 328 that is dependent on an operation history 330 of the unretired representative aircraft of the identified type;

210 based on (i) the theoretical hazard function, (ii) the second service lifetime, and (iii) the second operation history, calculating a quantity 332 of a component to maintain in inventory, wherein the component is configured for use on the second unretired aircraft; and

212 initiating a process to maintain the calculated quantity of the component in inventory.

INSTRUCTIONS
114

318

320

DATA
115

COMPUTER
READABLE MEDIA
104

PROCESSOR(S)
102

112

COMMUNICATION
INTERFACE
106

DISPLAY
108

USER INTERFACE
110

COMPUTING SYSTEM 100

FIG. 1

IDENTIFYING TYPE OF AIRCRAFT FOR ANALYSIS

202

CALCULATING FIRST PROBABILITY THAT UNRETIRED REPRESENTATIVE AIRCRAFT OF IDENTIFIED TYPE WILL HAVE FUTURE SERVICE LIFETIME THAT IS NO LESS THAN FIRST SERVICE LIFETIME OF FIRST RETIRED AIRCRAFT OF IDENTIFIED TYPE

204

CALCULATING SECOND PROBABILITY THAT UNRETIRED REPRESENTATIVE AIRCRAFT OF IDENTIFIED TYPE WILL HAVE FUTURE SERVICE LIFETIME THAT IS NO LESS THAN SECOND SERVICE LIFETIME OF SECOND UNRETIRED AIRCRAFT OF IDENTIFIED TYPE

206

BASED ON (I) FIRST PROBABILITY, (II) SECOND PROBABILITY, (III) FIRST OPERATION HISTORY OF FIRST RETIRED AIRCRAFT, AND (IV) SECOND OPERATION HISTORY OF SECOND UNRETIRED AIRCRAFT, GENERATING THEORETICAL HAZARD FUNCTION THAT INCLUDES BASELINE HAZARD FACTOR THAT IS DEPENDENT ON CURRENT SERVICE LIFETIME OF UNRETIRED REPRESENTATIVE AIRCRAFT OF IDENTIFIED TYPE AND PROPORTIONAL HAZARD FACTOR THAT IS DEPENDENT ON OPERATION HISTORY OF UNRETIRED REPRESENTATIVE AIRCRAFT OF IDENTIFIED TYPE

208

BASED ON (I) THEORETICAL HAZARD FUNCTION, (II) SECOND SERVICE LIFETIME, AND (III) SECOND OPERATION HISTORY, CALCULATING QUANTITY OF COMPONENT TO MAINTAIN IN INVENTORY, WHEREIN COMPONENT IS CONFIGURED FOR USE ON SECOND UNRETIRED AIRCRAFT

210

INITIATING PROCESS TO MAINTAIN CALCULATED QUANTITY OF COMPONENT IN INVENTORY

212

FIG. 2

200

250

214 | CALCULATING ONE OR MORE ADDITIONAL PROBABILITIES THAT UNRETIRED REPRESENTATIVE AIRCRAFT OF IDENTIFIED TYPE WILL HAVE FUTURE SERVICE LIFETIME THAT IS RESPECTIVELY NO LESS THAN ONE OR MORE ADDITIONAL SERVICE LIFETIMES OF ONE OR MORE ADDITIONAL AIRCRAFT OF IDENTIFIED TYPE

FIG. 3A

260

216 | INTEGRATING THEORETICAL HAZARD FUNCTION TO GENERATE CUMULATIVE HAZARD FUNCTION

218 | USING CUMULATIVE HAZARD FUNCTION TO GENERATE THEORETICAL SURVIVAL FUNCTION

FIG. 3B

| Aircraft ID | Service Lifetime (Years) | Retired? | ESF | EHF |
|---|---|---|---|---|
| 306 → 1 | 304 → 10.5 | 1 | 302 → 0.90 | 348 → 0.01 |
| 316 → 2 | 314 → 12 | 0 | 312 → 0.90 | 350 → 0.00 |
| 346 → 3 | 344 → 13.5 | 0 | 342 → 0.90 | 0.00 |
| 4 | 15.5 | 1 | 0.77 | 0.08 |
| 5 | 17.1 | 0 | 0.77 | 0.00 |
| 6 | 17.6 | 0 | 0.77 | 0.00 |
| 7 | 18.1 | 1 | 0.58 | 0.67 |
| 8 | 18.4 | 1 | 0.39 | 1.67 |
| 9 | 18.9 | 1 | 0.19 | 2.00 |
| 10 | 19.5 | 0 | 0.19 | 0.00 |
| 338 | 336 | | 334 | 351 |

FIG. 4

EP 3 605 418 A1

| Aircraft ID | Service Lifetime (Years) | Retired? | ESF | EHF |
|---|---|---|---|---|
| 1 (306) | 10.5 (304) | 1 | 0.90 (302) | 0.01 (348) |
| 2 (316) | 12 (314) | 0 | 0.90 (312) | 0.00 (350) |
| 3 (347) | 13.5 (345) | 1 | 0.79 (343) | 0.10 |
| 4 | 15.5 | 1 | 0.68 | 0.08 |
| 5 | 17.1 | 0 | 0.68 | 0.00 |
| 6 | 17.6 | 0 | 0.68 | 0.00 |
| 7 | 18.1 | 1 | 0.51 | 0.67 |
| 8 | 18.4 | 1 | 0.34 | 1.67 |
| 9 | 18.9 | 1 | 0.17 | 2.00 |
| 10 | 19.5 | 0 | 0.17 | 0.00 |

338    336    334    351

FIG. 5

EP 3 605 418 A1

| Aircraft ID | Service Lifetime (Years) | Retired? | ESF | EHF |
|---|---|---|---|---|
| 1 | 10.5 | 0 | 1.00 | 0.00 |
| 2 | 12 | 1 | 0.89 | 0.08 |
| 3 | 13.5 | 0 | 0.89 | 0.00 |
| 4 | 15.5 | 1 | 0.76 | 0.08 |
| 5 | 17.1 | 0 | 0.76 | 0.00 |
| 6 | 17.6 | 0 | 0.76 | 0.00 |
| 7 | 18.1 | 1 | 0.57 | 0.67 |
| 8 | 18.4 | 1 | 0.38 | 1.67 |
| 9 | 18.9 | 1 | 0.19 | 2.00 |
| 10 | 19.5 | 0 | 0.19 | 0.00 |

316, 306, 346 / 314, 304, 344 / 312, 302, 342 / 350, 348

338 336 334 351

FIG. 6

EP 3 605 418 A1

| Aircraft ID | Service Lifetime (Years) | Retired? | ESF | EHF |
|---|---|---|---|---|
| 316 → 1 | 314 → 10.5 | 0 | 312 → 1.00 | 350 → 0.00 |
| 306 → 2 | 304 → 12 | 1 | 302 → 0.89 | 348 → 0.08 |
| 347 → 3 | 345 → 13.5 | 1 | 343 → 0.78 | 0.10 |
| 4 | 15.5 | 1 | 0.67 | 0.08 |
| 5 | 17.1 | 0 | 0.67 | 0.00 |
| 6 | 17.6 | 0 | 0.67 | 0.00 |
| 7 | 18.1 | 1 | 0.50 | 0.67 |
| 8 | 18.4 | 1 | 0.33 | 1.67 |
| 9 | 18.9 | 1 | 0.17 | 2.00 |
| 10 | 19.5 | 0 | 0.17 | 0.00 |
| 338 | 336 | | 334 | 351 |

FIG. 7

EP 3 605 418 A1

$$h(t) = h_0(t)e^{\beta_1 x_1 + \beta_2 x_2 + \beta_3 x_3}$$

326    324    328    322    326    331A    330A    331B    330B    331C    330C

## FIG. 8

$$H(t) = \int_0^t h(u)\,du$$

352    322

## FIG. 9

$$S(t) = e^{-H(t)}$$

354    352

## FIG. 10

| AC ID | MODEL | PRED YEAR | SURV PROB |
|---|---|---|---|
| 1A | 737 | 2018 | 79% |
| 1A | 737 | 2019 | 75% |
| 1A | 737 | 2020 | 70% |
| 1A | 737 | 2021 | 66% |
| 1A | 737 | 2022 | 59% |
| 1A | 737 | 2023 | 55% |
| 1A | 737 | 2024 | 48% |
| 1A | 737 | 2025 | 44% |
| 1A | 737 | 2026 | 40% |
| 1A | 737 | 2027 | 39% |
| 1A | 737 | 2028 | 32% |

## FIG. 11

| AC ID | MODEL | PRED YEAR | SURV PROB |
|---|---|---|---|
| 11A | 737 | 2018 | 79% |
| 12A | 737 | 2018 | 75% |
| 13A | 737 | 2018 | 76% |
| 14A | 737 | 2018 | 83% |
| 15A | 737 | 2018 | 75% |
| 16A | 737 | 2018 | 78% |
| 17A | 737 | 2018 | 75% |
| 18A | 737 | 2018 | 78% |
| 19A | 737 | 2018 | 83% |

## FIG. 12

EP 3 605 418 A1

Europäisches
Patentamt

European
Patent Office

Office européen
des brevets

# EUROPEAN SEARCH REPORT

**Application Number**

EP 19 18 9735

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/082229 A1 (WINGENTER RONALD [US]) 3 April 2008 (2008-04-03) * paragraphs [0012] - [0029]; figures 1-8 * | 1-15 | INV. G06Q10/00 |
| X | US 2015/142402 A1 (RAMESH ANAPATHUR V [US] ET AL) 21 May 2015 (2015-05-21) * paragraphs [0005] - [0016]; figures 1-15 * | 1-15 | |

----- 

-----

**TECHNICAL FIELDS SEARCHED (IPC)**

G06Q

The present search report has been drawn up for all claims

| Place of search | Date of completion of the search | Examiner |
|---|---|---|
| Munich | 24 October 2019 | Bîrlescu, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 9735

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2019

| Patent document cited in search report | Publication date | Patent family member(s) | Publication date |
|---|---|---|---|
| US 2008082229 A1 | 03-04-2008 | NONE | |
| US 2015142402 A1 | 21-05-2015 | AU 2014208308 A1 | 04-06-2015 |
| | | CA 2857923 A1 | 18-05-2015 |
| | | CN 104657536 A | 27-05-2015 |
| | | EP 2876519 A2 | 27-05-2015 |
| | | JP 6558883 B2 | 14-08-2019 |
| | | JP 2015111402 A | 18-06-2015 |
| | | US 2015142402 A1 | 21-05-2015 |

EPO FORM P0459

For more details about this annex : see Official Journal of the European Patent Office, No. 12/82